(19) Europäisches Patentamt
European Patent Office
Office européen des brevets

(11) EP 0 663 933 B1

(12) EUROPÄISCHE PATENTSCHRIFT

(45) Veröffentlichungstag und Bekanntmachung des Hinweises auf die Patenterteilung:
**18.12.1996 Patentblatt 1996/51**

(51) Int Cl.[6]: **C08K 3/22**, C08K 9/06, C08L 67/02

(21) Anmeldenummer: **93920838.5**

(22) Anmeldetag: **30.09.1993**

(86) Internationale Anmeldenummer:
**PCT/EP93/02660**

(87) Internationale Veröffentlichungsnummer:
**WO 94/07945 (14.04.1994 Gazette 1994/09)**

# (54) FORMKÖRPER AUS POLYESTER, DIE KOVALENT EINGEBUNDENE OXIDPARTIKEL ENTHALTEN

MOLDED BODIES MADE OF POLYESTER COTAINING COVALENT-BONDED OXIDE PARTICLES

CORPS MOULES EN POLYESTER QUI CONTIENNENT DES PARTICULES D'OXYDE LIEES DE MANIERE COVALENTE

(84) Benannte Vertragsstaaten:
**DE FR GB IT LU NL**

(30) Priorität: **05.10.1992 DE 4233396**
**19.05.1993 DE 4316814**

(43) Veröffentlichungstag der Anmeldung:
**26.07.1995 Patentblatt 1995/30**

(73) Patentinhaber:
- **HOECHST AKTIENGESELLSCHAFT**
**65926 Frankfurt am Main (DE)**
- **MERCK PATENT GmbH**
**D-64271 Darmstadt (DE)**

(72) Erfinder:
- **DALLMANN, Herrmann**
**D-65207 Wiesbaden (DE)**
- **KINKEL, Joachim**
**D-55452 Guldental (DE)**
- **MARQUARD, Kurt**
**D-64354 Reinheim (DE)**
- **POHL, Ludwig**
**D-64285 Darmstadt (DE)**

(56) Entgegenhaltungen:
**EP-A- 0 114 636**
**WO-A-90/02779**
**DE-C- 3 627 520**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 663 933 B1

## Beschreibung

Die Erfindung betrifft Formkörper, insbesondere Folien, welche mindestens eine Polyesterschicht enthalten und welche oberflächenmodifizierte Oxidpartikel enthalten. Bei den Folien handelt es sich bevorzugt um ein- oder mehrschichtige mono- oder biaxial orientierte und thermofixierte Folien, bei denen mindestens eine Schicht überwiegend aus einem Polyester aufgebaut ist. Diese Polyesterschicht enthält Oxidpartikel, die an ihrer Oberfläche so modifiziert sind, daß sie kovalent in die Polyestermatrix eingebunden sind.

Biaxial orientierte Folien aus Polyester, insbesondere aus Polyethylenterephthalat, Polyethylennaphthalat oder Polycyclohexandimethanolterephthalat, finden wegen ihrer überlegenen Eigenschaften wie ihrer Zugfestigkeit, ihrer Reißfestigkeit ihres Elastizitätsmoduls, ihrer Transparenz, ihrer chemischen und thermischen Beständigkeit und dergleichen Anwendung in großem Umfang auf vielen technischen Gebieten wie z.B. dem reprographischen Sektor, als Dielektrikum für Kondensatoren, als Trägerfolien für magnetische Aufzeichnungsmedien wie z.B. für Audio-, Video- und Computerbänder sowie Floppy Disks, Thermodruckbänder, als Präge- und Trennfolien, und als Verpackungsmaterial.

Die Polyesterfolien müssen für die verschiedenen Einsatzgebiete spezifische Anforderungen erfüllen, die üblicherweise mit Hilfe der Rohstoffrezepturen und/ oder mittels bestimmter Verfahrenstechniken während ihrer Herstellung eingestellt werden.

Der Oberflächenstruktur der Folien kommt hierbei eine besondere Bedeutung zu, weil sie für das Gleit- und Abriebverhalten bei der Herstellung und Verarbeitung der Folien ausschlaggebend ist.

Folien mit extrem glatter Oberfläche weisen ein schlechtes Gleitverhalten auf, das sich sowohl während ihrer Produktion als auch während ihrer Weiterverarbeitung negativ auswirkt.

Es gehört zum Stand der Technik, die genannten Nachteile durch Einarbeitung anorganischer und/oder organischer Inertpartikel mit definierter Korngrößenverteilung zu überwinden, beziehungsweise abzumildern. Beispiele für derartige Inertpartikel, die allein oder in Kombination eingesetzt werden können, sind $CaCO_3$, $TiO_2$, $Al_2O_3$, $ZrO_2$, $BaSO_4$, Calciumphosphat, Kaolin, $SiO_2$ oder natürliche und synthetische Silikate.

Die Einarbeitung der Inertpartikel ist aufgrund ihrer unzureichenden Einbindung in die Polymermatrix mit anderen, z.T. gravierenden Nachteilen verbunden. Bei Magnetbändern können z.B. bei wiederholtem Gebrauch aus der Oberfläche der Trägerfolie die unzureichend eingebundenen Inertpartikel herausgerissen werden und damit die elektromagnetischen Eigenschaften des Bandes bis hin zu einem völligen Informationsverlust beeinträchtigen. Bei Kondensatorfolien können andererseits Störungen der dielektrischen Eigenschaften bis hin zu einem elektrischen Durchschlag führen.

Zur Verbesserung der Affinität der Inertpartikel zur Polymermatrix und damit zur Verbesserung der Qualität, d.h. des Eigenschaftsbildes der unter Verwendung dieser Inertpartikel hergestellten Formkörper, wurde vorgeschlagen, sie in Abhängigkeit von ihrer chemischen Zusammensetzung einer Oberflächenbehandlung zu unterziehen.

Eine Darstellung der Möglichkeiten einer Oberflächen modifizierung carbonatischer Füllstoffe mit dem Ziel, Einfluß auf die Wechselwirkungen in den Grenzflächen speziell von $CaCO_3$/Polymer zu nehmen, wird z.B. in Plaste und Kautschuk, 37. Jahrgang, Heft 8/1990, Seite 269 und folgende gegeben.

In der US-A-3,227,675 wird die Behandlung von "clays" (Kaolinen) mit Organosiliciumverbindungen zwecks besserer Einbindung in eine Polymermatrix beschrieben.

In der DE-A-35 34 143 werden monodisperse $SiO_2$-Partikel beschrieben, die vorzugsweise für chromatographische Zwecke gedacht sind, deren auf der Oberfläche befindlichen funktionellen Gruppen mit Organotrialkoxysilanen umgesetzt wurden.

Ein Verfahren zur Modifizierung von synthetischen silikatischen Füllstoffen mit schwefelhaltigen Organosiliciumverbindungen zwecks Verbesserung ihrer Einbindung in vulkanisierbare Kautschukmischungen wird in der EP-A-0 177 674 beschrieben.

In der US-A-4,567,030 werden ebenfalls monodisperse Mischoxidpartikel beschrieben, die als "filler" verwendet werden können, deren Oberflächen zwecks Verbesserung der Feuchtigkeitsresistenz und der "Dispergierbarkeit in einem Harz" mit einem $\gamma$-Aminopropyltrimethoxysilan oder Silanen, die ethylenisch ungesättigte Gruppen enthalten, modifiziert sind.

In der EP-A-0 236 945 werden stabile glykolische Dispersionen von Oxidpartikeln mit definierter Gestalt und Korngröße beschrieben, die auf ihrer Oberfläche Glykol gebunden enthalten. Die unter Verwendung solcher Dispersionen hergestellten Folien sollen eine gute Abriebfestigkeit aufweisen.

In der Praxis hat sich gezeigt, daß die bisher vorgeschlagenen Maßnahmen nicht zu einer durchgreifenden Verbesserung der Einbindung der Inertpartikel in die PET-Matrix geführt haben. Bei der Orientierung von Folien kommt es deshalb nach wie vor zu Abrissen der Inertpartikel von der Polymermatrix unter Bildung unerwünschter Hohlräume (Voids), wobei deren Gestalt und Größe weitgehend von den gewählten Streckparametern abhängen.

Aufgabe der vorliegenden Erfindung war es deshalb, einen Formkörper, vorzugsweise eine wenigstens einschichtige, mono- oder biaxial orientierte Folie in der Dicke von 0,5 bis 500 µm zur Verfügung zu stellen, die in gleichmäßiger

Verteilung Inertpartikel enthält, die aufgrund ihrer speziellen Oberflächenmodifizierung weitgehend voidfrei in die Polyestermatrix eingebunden sind, und damit das Eigenschaftsbild der Folie, wie z.B. ihre Abriebfestigkeit, die als ein Maß für die Güte der Einbindung der Partikel in die Matrix anzusehen ist, nicht negativ beeinflußt.

Gelöst wird diese Aufgabe durch einen Formkörper, insbesondere durch eine ein- oder mehrschichtige mono- oder biaxial orientierte Folie mit einer Gesamtdicke von 0,5 bis 500 µm, wobei mindestens eine Schicht der Folie im wesentlichen aus Polyester besteht und Oxidpartikel enthält, welche mit einem Silanisierungsmittel der Formel I behandelt wurden

$$[R^1R^2R^3]Si-(CH_2)_l-X-R^4 \qquad (I)$$

worin

$R^1$ Cl oder Alkoxy mit 1 bis 6 C-Atomen
$R^2$,$R^3$ Alkyl mit 1 bis 6 C-Atomen oder die Bedeutung von $R^1$
l die Zahlen 1 bis 6
X eine Einfachbindung, -O-, -NH-, -COHN-, -NHCOHN-
$R^4$

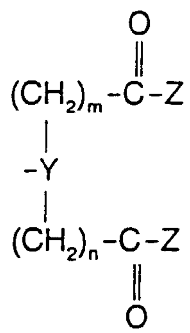

mit Y = CH oder

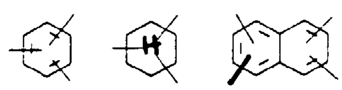

Z = OR oder zwei Reste Z gemeinsam -O-, $>$NR
und m, n die Zahlen 0 bis 6,
oder

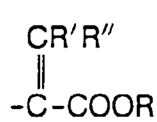

wobei X eine Einfachbindung ist,
mit R, R', R" = H oder Alkyl mit 1 bis 6 C-Atomen,
bedeuten.

Als Basismaterial der oxidischen Primärpartikel kommen prinzipiell alle festen anorganischen Oxide in Betracht, die einer chemischen Reaktion an der Partikeloberfläche mit an sich bekannten Silanisierungsmitteln unter Ausbildung kovalenter Element-Sauerstoff-Siliciumbindungen zugänglich sind. Voraussetzung hierfür ist das Vorliegen freier oder hydratisierter Element-O- oder Element-OH-Gruppen an der Partikeloberfläche. Dies trifft zu für praktisch alle Metalloxide sowie einiger Halbmetalloxide wie $SiO_2$ und entsprechende Mischsysteme. Bevorzugte Basismaterialien sind deshalb $SiO_2$, $TO_2$, $ZrO_2$, $Al_2O_3$ aber auch $V_2O_5$, $Nb_2O_5$ sowie Mischungen von zwei oder mehr der vorgenannten

Oxide. Unter Mischsysteme sind auch komplexe mineralische Systeme wie Silikate, Aluminate, Alumosilikate etc. zu verstehen.

Die zur Oberflächenmodifizierung der oxidischen Primärpartikel einzusetzenden Silanisierungsmittel der Formel I sind so strukturiert, daß sie funktionelle Gruppen aufweisen, mit denen sich eine kovalente Einbindung in einen Polyester erreichen läßt. In Formel I ist dementsprechend an dem zentralen Si-Atom der Siliciumorganischen Verbindung über eine Spacergruppierung aus 1 bis 6 Methyleneinheiten und eine Verknüpfungseinheit, die eine Einfachbindung, Sauerstoff, eine Amino-, Amid-, oder Urethangruppe sein kann, eine derartige zur Reaktion mit Polyestern, deren Bestandteile bzw. Ausgangsprodukte befähigte Gruppe ($R^4$) gebunden. Die funktionelle Gruppe $R^4$ ist so strukturiert, daß sie Carbonsäuregruppen bzw. Abwandlungsprodukte hiervon wie Carbonsäureester, Carbonsäureamid- und Carbonsäureanhydrid-Gruppen und/oder ethylenisch ungesätigte Gruppen aufweist. Im Hinblick auf einen kovalenten Einbau in den Polyester sind als funktionelle Gruppe $R^4$ solche bevorzugt, die sich von aliphatischen, cycloaliphatischen oder aromatischen Dicarbonsäuren ableiten. Als zugrundeliegende aliphatische Dicarbonsäure kommen solche mit bis zu insgesamt 15 C-Atomen in Betracht. Bevorzugt sind Malonsäure und Bernsteinsäure, deren Ester, Amide bzw. Anhydride. Bei den cycloaliphatischen und aromatischen Dicarbonsäuren können die Säuregruppen vom alicyclischen bzw. aromatischen Ring jeweils durch bis zu 6 C-Atome getrennt sein. Bevorzugt sind hierbei die Terephthalatsäure, die Isophthalatsäure sowie die Naphthalindicarbonsäure sowie Abkömmlinge derselben. Alternativ hierzu kann die funktionelle Gruppe $R^4$ auch von der Acrylsäure bzw. den Acrylestern und Homologen derselben abgeleitet sein.

Von den verbleibenden drei Resten $R^1$, $R^2$, $R^3$ am Si-Atom der Verbindungen der Formel I muß zumindest einer, vorzugsweise zwei oder alle drei, eine hydrolytisch abspaltbare Gruppe wie Chlor oder Alkoxy mit 1 bis 6 C-Atomen sein, ansonsten aber Alkyl mit 1 bis 6 C-Atomen. Durch die hydrolytische Abspaltbarkeit wird die Befähigung der Verbindungen der Formel I zur kovalenten Bindungsknüpfung zu dem oxidischen Primärpartikel und somit als Silanisierungsmittel zu wirken, bedingt. Die Silanisierungsmittel der Formel I sind zum Teil handelsüblich, ansonsten aber durch an sich bekannte Methoden herstellbar. Wesentliche Ausgangsprodukte für die Carbonsäure-derivatisierten Silane sind einerseits Mono-, Di- oder Trichlorsilane bzw. Mono-, Di- oder Trialkoxysilane wie z.B. chlordimethylsilan, Methyldichlorsilan, Trichlorsilan, Trimethoxysilan, Triethoxysilane, Ethoxydimethylsilan und Dimethoxyethylsilan. Auf der anderen Seite sind es Dicarbonsäuren bzw. Derivate wie z.B. Malonsäure, Malonsäurediethylester, Bernsteinsäure, Bernsteinsäureanhydrid, 2-Amino-Terephthalsäure.

Beispiele für Silanisierungsmittel der Formel I sind:
Triethoxysilylpropylmalonsäurediethylester(Ethoxydimethylsilylpropyl)-bernsteinsäureanhydrid, (Triethoxysilylmethyl)-bernsteinsäurediethylester, 4-(Methyldiethoxysilyl)-butansäure-(terephthalsäuredimethylester)-amid.

Die chemische Anbindung der mit den funktionellen Gruppen ausgerüsteten Silane an die Partikeloberfläche erfolgt entweder während oder im Anschluß an die Synthese der Oxidpartikel. Sie kann bei synthetischen oder natürlichen Oxiden bzw. oxidhaltigen Inertpartikeln auch nach der auf den jeweiligen Anwendungszweck des aus dem Polyester herzustellenden Formkörpers abgestimmten Aufbereitung erfolgen, wobei sie entweder mit den Silanisierungsmitteln direkt in Kontakt gebracht werden oder in einer Lösung des Silanisierungsmittels bis zur vollständigen Oberflächenbelegung behandelt werden.

Der Polyesterrohstoff bzw. der daraus hergestellte Formkörper enthält 0,001 bis 20 Gew.-%, vorzugsweise 0,005 bis 5 Gew.-%, der silanmodifizierten Oxid- bzw. oxidhaltigen Inertpartikel (bezogen auf das Gewicht des Polyesters). Diese mit dem Silanisierungsmittel gemäß Formel I oberflächenmodifizierten Partikel weisen bevorzugt einen Durchmesser im Bereich von 0,01 bis 20 $\mu$m auf.

Die Korngröße sowie die Korngrößenverteilung der Partikel richten sich nach dem jeweiligen Anforderungsprofil des Formkörpers. Für sehr anspruchsvolle Anwendungen, z.B. für Trägerfolien für metallbedampfte Magnetbänder, werden vorzugsweise sphärische, modifizierte Oxidpartikel mit sehr enger Korngrößenverteilung eingesetzt, deren Quotient aus dem Gewichtsmittel des Teilchendurchmessers ($D_w$) und dem Zahlenmittel des Teilchendurchmessers ($D_n$) 1,5, bevorzugt $\leq$ 1,3 beträgt. Zur Bestimmung von ($D_w$) und ($D_n$) siehe U.E. Woods, J.S., I.M. Krieger, P. Pierce, J. of Paint Technology, Vol. 40, No. 527, Seiten 545 ff (1968).

Die Einarbeitung der oberflächenmodifizierten Oxide oder oxidhaltigen Inertpartikel in den Polyester kann entweder während seiner Herstellung (Dispersionsroute) oder unmittelbar vor Herstellung des Formkörpers (Masterbatchroute) erfolgen.

Die Zugabe der mit den beschriebenen Silanen oberflächenmödifizierten Inertpartikel während der Dispersionsroute hängt von dem Medium ab, in dem die Inertpartikel dispergiert sind. Glykolische Dispersionen derselben können zu jedem Zeitpunkt des Herstellungsprozesses zugesetzt werden. Bevorzugt erfolgt die Zudosierung der glykolischen Dispersionen der Inertpartikel so, daß eine thermische Schädigung der an die Partikel gebundenen funktionellen Gruppen unterbunden wird. Die Zudosierung derfolgt deshalb bei dem Umesterungsverfahren vorzugsweise nach der Umesterung und Schmelzefiltration (turbulente Dosierung) oder ebenso wie beim Direktesterverfahren (PTA-Verfahren) nach Erreichen einer Schmelzeviskosität von ca. 0,30 dl/g.

Feste Dispersionen der oberflächenmodifizierten Inertpartikel z.B. in Polyalkylenglykolen, wie sie in der EP-A-0 406 727 beschrieben werden, werden ebenfalls vorzugsweise nach der Umesterung oder zu Beginn der Polykondensation zugesetzt.

Je nach Bedarf können nur mit dem Silanisierungsmittel der Formel I oberflächenmodifizierte Oxidpartikel beziehungsweise silanmodifizierte oxidhaltige Partikel mit enger Korngrößenverteilung, Mischungen derselben mit unterschiedlicher Teilchengröße oder Mischungen derselben mit organischen Partikel, die vernetzt oder gehärtet sein können, wie sie u.a. in der DE-A-30 19 073 beschrieben sind, oder mit anorganischen herkömmlichen Partikeln wie Carbonaten, Sulfaten oder Phosphaten der Erdalkalimetalle eingesetzt werden. Diese zusätzlichen Inertpartikel können entweder zusammen mit den speziell oberflächenmodifizierten Inertpartikeln oder getrennt nach den bekannten Verfahren in den Polyester eingearbeitet werden. Alternativ oder in Ergänzung zu den erwähnten herkömmlichen Inertpartikeln können auch die während der Herstellung der Polyester gezielt gefällten Katalysatorpräzipitate verwendet werden.

Bei der sogenannten Masterbatchroute können die speziell oberflächenmodifizierten Inertpartikel in Form hochkonzentrierter Polyesterchips entweder allein oder zusammen mit anderen eventuell erforderlichen anorganischen oder organischen Additiven dem Polyesterrohstoff zudosiert werden.

Alternativ zu den Polyestermasterbatchen können die speziell oberflächenmodifizierten Inertpartikel auch in Form der in der EP-A-0 406 727 beschriebenen Masterbatche während der Folienherstellung dem Basisrohstoff zudosiert werden.

Die Auswahl der jeweils einzusetzenden Inertpartikel richtet sich, wie erwähnt, nach dem Anforderungsprofil des herzustellenden Formkörpers. So werden z.B. für optisch hochwertige Formkörper, wie z.B. für Folien für reprographische Anwendungen, Inertpartikel mit einem auf die Polyestermatrix abgestimmten Brechungsindex bevorzugt, wie sie u.a. in der DE-A-42 19 287 beschrieben werden.

Die Polyester der vorliegenden Erfindung können neben den schlupffördernden Inertpartikeln noch zusätzlich organische Schlupf-Gleitmittel/Nukleierungsmittel, Antioxidantien, Thermostabilisatoren, Antistatika (z. B. Salze von Alkylsulfonsäuren oder sulfonierte Polyoxyalkylene) u.a. enthalten.

Beispiele für Additive, die sich sowohl auf das Gleit- als auch auf das Abriebverhalten von Polyesterfolien positiv auswirken, sind langkettige Monocarbonsäuren und deren Ester und Esterwachssalze wie Palmitate, Stearate oder Montanate, Polysiloxane, Polyether- und Polyestersiloxane, Glycerinester, etc. Die Konzentration der schlupffördernden organischen Additive liegt im Bereich von 0,005 bis 20 Gew.-%, vorzugsweise von 0,01 bis 5 Gew.-%, bezogen auf den Polyester.

Als Polyester werden im Rahmen der Erfindung Homo- und Copolykondensate, Gemische verschiedener Polyester sowie Abmischungen oder Blends von Polyestern mit anderen Polymeren und gegebenenfalls Harzen angesehen.

Die Herstellung der Polyester kann sowohl nach dem Umesterungsverfahren, z.B. mit Hilfe von Umesterungskatalysatoren wie z.B. Zn-, Mg-, Ca-, Mn-, Li- oder Ge-Salzen, wie auch nach dem Direktesterverfahren (TPA-Verfahren) erfolgen, bei dem Antimonverbindungen als Polykondensationskatalysatoren und Phosphorverbindungen als Stabilisatoren verwendet werden. Der RSV-Wert der Polyester liegt vorzugsweise im Bereich von 0,4 bis 1,0 dl/g.

Beispiele für Polyester sind Polykondensate aus Terephthalsäure, Isophthalsäure oder 2,6-Naphthalindicarbonsäure mit Glykolen mit 2 bis 10 Kohlenstoffatomen wie Polyethylenterephthalat, Polybutylenterephthalat, Poly-1,4-cyclohexylendimethylentrephthalat, Polyethylen-2,6-naphthalindicarboxylat, Polyethylennaphthalat/Bibenzoat oder Polyethylen-p-hydroxy-benzoat.

Die Polyester können bis zu 50 Mol-%, insbesondere bis zu 30 Mol-%, aus Comonomereinheiten aufgebaut sein, wobei eine Variation in der Glykol- und/oder der Säurekomponente möglich ist. Als Säurekomponente können die Copolyester, z.B. Adipinsäure, Glutarsäure, Bernsteinsäure, Sebazinsäure, Phthalsäure, Isophthalsäure, 5-Na-sulfoisophthalsäure oder polyfunktionelle Säuren wie Trimelithsäure u.a. enthalten.

Die Polyestergemische können aus Polyester-Homopolymeren, Polyester-Copolymeren oder Polyester-Homo- und Copolymeren bestehen. Beispiele hierfür sind Abmischungenvon Polyethylenterephthalat/Polybutylenterephthalat, Polyethylenterephthalat/Polyethylenisophthalat oder Polyethylenisophthalat/5-Natriumsulfoisophthalat.

Beispiele für Polymere, die der Polyester zur Verbesserung seiner Streckbarkeit, seiner mechanischen oder optischen Eigenschaften oder zur Einstellung spezieller Oberflächeneigenschaften daraus hergestellter Formkörper enthalten kann, sind Polyolefin-Homo- oder -Copolymere wie Polyethylen, Polypropylen, Poly-4-methylpenten, Ethylen-Vinylacetat-Copolymere, die ihrerseits verseift sein können, Ionomere, Polyamide, Polyacetone, Polycarbonate, Polysulfone u.a. Diese Substanzen können während der Rohstoff- oder Folienherstellung in den Polyester eingearbeitet werden.

Aus dem oben beschriebenem Polyesterrohstoff werden die erfindungsgemäßen Formkörper, insbesondere ein- oder mehrschichtige Folien hergestellt. Mindestens eine Schicht dieser Folie besteht im wesentlichen aus Polyester, d.h. mindestens eine Schicht dieser Folie ist aus dem oben beschriebenen Rohstoff aufgebaut, der, wie beschrieben, neben einem oder verschiedenen Polyestern auch Additive enthält.

Die Folien werden zweckmäßigerweise nach dem Extrusionsverfahren hergestellt, wobei das die speziell oberflächenmodifizierten Inertpartikel und ggf. weitere Additive enthaltende Polyestermaterial aufgeschmolzen, zu einer Vorfolie extrudiert, auf einer Kühlwalze abgeschreckt und dieser Film anschließend in Längsrichtung und/oder Querrichtung bei Temperaturen zwischem dem Glaspunkt des Polymeren und 180 °C mit einem Flächenstreckverhältnis vorzugsweise im Bereich von 4 bis 30 vertreckt und anschließend bei Temperaturen zwischen 150 °C und 270 °C hitzefixiert wird. Die Anzahl und Reihenfolge der Längs- und Querstreckstufen ist nicht fest vorgegeben, sondern richtet sich nach dem späteren Einsatzgebiet der Folien. Die einzelnen Streckvorgänge "längs" und "quer" können ein- oder mehrstufig durchgeführt werden. Eine gleichzeitige Längs und Querstreckung (Simultanstreckung) ist ebenso möglich.

Die aus den Streckverfahren resultierenden Folien können nur in einer Richtung eine erhöhte Festigkeit aufweisen (monoaxial gestreckt), in beiden Richtungen ausgewogene mechanische Eigenschaften aufweisen (balanced Folien) oder in Quer- und/oder Längsrichtung besondere Festigkeiten aufweisen (tensilized oder supertensilized Folien).

Die Folien können ein- oder mehrschichtig sein, sie können symmetisch oder asymmetrisch aufgebaut sein, wobei verschieden rezepturierte beziehungsweise rezepturierte oder nicht rezepturierte Polyester oder solche gleicher chemischer Zusammensetzung, jedoch mit unterschiedlichem Molekulargewicht und verschiedener Viskosität, durch Coextrusion vereinigt werden können.

Die erfindungsgemäßen Folien können auch 5 bis 50 Gew.-% an arteigenem Regenerat enthalten.

Die erfindungsgemäßen Folien weisen eine Gesamtdicke von 0,5 bis 500 µm, insbesondere von 0,5 bis 100 µm, besonders bevorzugt von 0,5 bis 40 µm, auf.

Die Oberflächeneigenschaften und Oberflächenrauhigkeiten der Folien können über eine ein- oder beidseitige Beschichtung während ihrer Herstellung, z.B. nach der ersten Streckstufe (sog. In-line-Verfahren) oder getrennt davon (off-line-Verfahren), mit Lösungen oder Dispersionen von Polymeren, wie z.B. Copolyestern, Polyurethanen, etc., die ihrerseits anorganische oder organische Inertpartikel und/oder schlupffördernde Additive enthalten können, den jeweiligen Anforderungen angepaßt werden.

Die Dispersionen oder Lösungen können zur Verbesserung der Eigenschaften der aufgetragenen Schicht zusätzlich organische Additive wie z.B. Na-Montanat, Fettsäureester, Silan- oder Siloxan-Kopplungsreagenzien sowie anorganische Additive wie z.B. kolloidale $SiO_2$, $TO_2$-Partikel enthalten. Die Beschichtungen können im In-line-Verfahren, d.h. zwischen den Streckstufen oder nach der Orientierung, aufgebracht werden.

Die Folien mit den oberflächenmodifizierten Oxid-Partikeln beziehungsweise oxidhaltigen Partikeln können sowohl auf dem technischen Sektor wie z.B. für Kondensatoren, magnetische Aufzeichnungsmedien, für reprographische Zwecke bzw. als Trenn- oder Prägefolie als auch auf dem Verpackungssektor verwendet werden.

Im folgenden wird die Erfindung anhand von Ausführungsbeispielen näher erläutert werden.

## Beispiele

Die in den Beispielen und der Tabelle 1 angegebenen Werte für den RSV-Wert, die Abriebfestigkeit, den $F_5$-Longitudinalwert, das E-Modul, die Reibungszahl und den $R_a$-Wert wurden folgendermaßen ermittelt:

### 1. **RSV-Wert:**

Der Wert gibt die reduzierte spezifische Viskosität an, er wurde nach DIN 53 728, Blatt 2, gemessen.

### 2. **Abriebfestigkeit:**

Sie wurde mit Hilfe eines selbst entwickelten Gerätes geprüft, bei dem ein 12,5 mm breites Folienband mit konstanter Geschwindigkeit und verschiedenen Bahnspannungen zunächst über Reinigungswalzen, dann über einen Umlenkstift aus Edelstahl und anschließend über zwei als Meßrollen dienende Gummiwalzen geführt wird. Die Beladung der Gummirollen diente als Maßstab für die Abriebfestigkeit der Folien. Als Vergleiche dienten Meßstandards von 1 (sehr abriebfest) bis 6 (sehr starker Abrieb).

### 3. **$F_5$-Longitudinalwert:**

Der Wert gibt die Reißfestigkeit der Folie bei 5 % Dehnung an. Die Messung erfolgte gemäß DIN 53 455.

### 4. **E-Modul:**

Der Elastizitätsmodul wurde nach DIN 53 457 gemessen. $F_5$-Wert und E-Modul wurden mit einem ZWICK-Gerät Typ 1445 bestimmt, wobei die Meßlänge 100 mm, die Streifenbreite 15 mm und die Abzugsgeschwindigkeit 10 mm/min (E-Modul) beziehungsweise 100 mm/min betrugen. Die angegebenen Werte basieren auf fünf Einzelmessungen.

5. **Reibungszahl:**

Die Reibungszahl gibt den Schlupf der Folie an. Er wurde gemessen nach DIN 53 375.

6. **$R_a$-Wert:**

Der $R_a$-Wert drückt die Oberflächenrauhigkeit der Folie zahlenmäßig als arithmetischer Mittelwert aller Abstände des Rauhigkeitsprofils R von der Mittellinie aus.

Die Messung erfolgte nach DIN 4768 mittels Oberflächenmeßgerät Perthometer SP 6 der Firma Feinprüf GmbH, Göttingen. Die angegebenen Werte basieren auf sechs Einzelmessungen, wobei der höchste Wert bei der Mittelwertbildung unberücksichtigt blieb. Der cut-off betrug jeweils 0,25 mm.

Zusätzlich wurde der Mittenrauhwert mittels des Hommel-Testers T20S/ RP50 bei einem cut-off von 0,08 µm ermittelt (DIN 4762/1). Hierbei wurden folgende Parameter gewählt:

| | | |
|---|---|---|
| Lt (Länge der Fläche) | : 0,48 mm | X = 400 |
| ZP (Breite der Fläche) | : 0,4 mm | Y = 50 000 |
| MB (Meßbereich) | : 0,2 mm | Z = 150 |
| n = 50 (Linienzahl) | | |
| Vt = 0,05 mm/sec (Vorschubgeschwindigkeit) | | |

**Vergleichsbeispiel 1a:**

Ein Granulat aus einem Polyethylenterephthalat mit einem RSV-Wert von 0,820 dl/g, das 2000 ppm gleichmäßig in der Matrix verteilte, mit einem Gluconsäureamid des 3-Aminopropyltriethoxysilans oberflächen modifizierte, monodisperse $SiO_2$-Partikel mit einem mittleren Durchmesser von 0,5 µm enthielt, wurde aufgeschmolzen, zu einer amorphen Vorfolie geformt und auf einer Walze mit einer Oberflächentemperatur von ca. 30 °C abgekühlt.

Die Vorfolie wurde mittels Walzen aufgeheizt und bei 112 °C zunächst um das 1,05-Fache und anschließend bei 107 °C nochmals um das 3,0-Fache in Maschinenrichtung und anschließend in einem Rahmen bei 95 °C um das 3,5-Fache quergestreckt und dann bei 200 °C fixiert. Die Dicke der Endfolie betrug 12 µm.

**Vergleichsbeispiel 1b**

Die Folie wurde gemäß Beispiel 1a hergestellt mit dem Unterschied, daß die Längsstreckung in zwei Stufen bei 115 °C um das 1,5-Fache und anschließend bei 107 °C um das 2,8-Fache gestreckt wurde (Streckart B). Die Dicke der Endfolien betrug 12 µm.

**Beispiel 2**

Es wurde eine 12 µm dicke Folie gemäß Beispiel 1b aus einem Polyesterrohstoff hergestellt, der 2000 ppm monodisperse, mit Triethoxysilylpropylmalonsäurediethylester oberflächenmodifizierte $SiO_2$-Partikel mit einem mittleren Durchmesser von 0,5 µm enthielt.

**Beispiel 3a und 3b**

Es wurden 12 µm dicke Folien entsprechend Beispiel 1a und 1b hergestellt, wobei der Rohstoff 2000 ppm mit Ethoxydimethylsilylpropyl)-bernsteinsäureanhydrid modifizierte $SiO_2$-Partikel gleicher Größe enthielten.

**Beispiel 4a und 4b**

Es wurden gemäß Beispiel 1a und 1b 12 µm dicke Folien unter Verwendung von mit 4-Methyldiethoxysilyl)-butansäure-(terephthalatsäuredimethylester)-amid modifizierte $SiO_2$-Partikel mit einem mittleren Durchmesser von 0,5 µm hergestellt.

**Vergleichsbeispiel 1c**

Es wurden gemäß Beispielen 1a und 1b 12 µm dicke Folien hergestellt, wobei unmodifizierte $SiO_2$-Partikel mit

einem mittleren Durchmesser von 0,5 µm eingesetzt wurden.

Von den erhaltenen Folien wurden die in der Tabelle 1 aufgeführten Eigenschaften mittels der angegebenen Meßmethoden ermittelt. Die Beurteilung der Güte der Einbindung der Partikel in die Matrix erfolgte jeweils über die Abriebfestigkeit der Folien. Wie aus den Beispielen ersichtlich, führt die angegebene Oberflächenmodifizierung der $SiO_2$-Partikel zu einer deutlichen Verringerung derselben und zwar weitgehend unabhängig von den gewählten Bedingungen. Die oberflächenmodifizierten $SiO_2$-Partikel sind somit im Vergleich zu den nicht-modifizierten $SiO_2$-Partikeln besser lagefixiert, d.h. in die PET-Matrix eingebunden.

Ergänzend wurden die Folienoberflächen 20 Minuten in einer $O_2$-Atmosphäre und anschließend 20 Minuten in einer Argon-Atmosphäre geätzt. Von den geätzten Folienoberflächen wurden rasterelektronenmikroskopische Aufnahmen bei einer Vergrößerung von 10 000 dergestalt angefertigt, daß wenigstens drei Inertpartikel zu erkennen waren.

Zur Beurteilung der Güte der Einbindung der Partikel in die Matrix wurde jeweils der Quotient aus dem maximalen Durchmesser des das Inertpartikel umgebenben Hohlraums ($D_H$) und des Partikel ($D_P$) selbst ermittelt.

Maßgebend war der Mittelwert aus wenigstens neun Einzelwerten. Hierbei wurde festgestellt, daß der Quotient

$$\frac{D_H}{D_P}$$

bei Einsatz der beschriebenen, mit dem Silanisierungsmittel gemäß Formel I oberflächenmodifizierten Inertpartikel ≤ 1,3 und bei Einsatz der unmodifizierten Partikel ≥ 1,5 betrug.

Die Größe der die Inertpartikel umgebenden Hohlräume wurde durch die beschriebene Oberflächenmodifizierung somit deutlich verringert und damit die Anbindung an die Matrix so verbessert, daß die Abriebfestigkeiten der Folien in der angegebenen Weise erhöht werden konnten.

## Tabelle 1

Eigenschaften von 12 $\mu m$ balanced PET-Folien in Abhängigkeit von der Oberflächenmodifizierung der $SiO_2$-Partikel

| Beispiel Nr. | Oberflächen-modifizierung der 0,5 $\mu m$ $SiO_2$-Partikel | StrecC-art | Rauhigkeit $R_a^{(nm)}$ | | Reißfestigkeit $N/mm^2$ | | E-Modul $N/mm^2$ | | Reibungszahl | | | | Abriebfestigkeit | | | DH DP |
|---|---|---|---|---|---|---|---|---|---|---|---|---|---|---|---|---|
| | | | Perthometer | Hommel | längs | quer | längs | quer | Haft- | | Gleit- | | Bahnspannung | | | |
| | | | | | | | | | I/I | A/A | I/I | A/A | 1000g | 1500g | 2000g | |
| Vergleichs-versuch | Standard | A<br>B | 22<br>16 | 10<br>16 | 107<br>112 | 110<br>121 | 4257<br>4518 | 5761<br>5795 | 33<br>28 | 30<br>29 | 28<br>27 | 28<br>27 | 4<br>4 | 6<br>6 | 6<br>6 | 1,5<br>1,7 |
| 1a<br>1b | GL | A<br>B | 26<br>29 | 12<br>13 | 107<br>112 | 110<br>121 | 4257<br>4518 | 5761<br>5795 | 27<br>28 | 26<br>29 | 26<br>28 | 25<br>28 | 2<br>1 | 3<br>2 | 3<br>2 | 1,3<br>1,2 |
| 2 | ME | B | 20 | 11 | 107 | 110 | 4257 | 5761 | 25 | 27 | 23 | 25 | 1 | 2 | 2 | 1,3 |
| 3a<br>3b | BA | A<br>B | 23<br>27 | 10<br>13 | 107<br>112 | 110<br>121 | 4257<br>4518 | 5761<br>5795 | 26<br>26 | 25<br>27 | 21<br>27 | 22<br>27 | 1<br>1 | 2<br>2 | 2<br>2 | 1,2<br>1,3 |
| 4a<br>4b | TE | A<br>B | 17<br>16 | 9<br>11 | 107<br>112 | 110<br>121 | 4257<br>4518 | 5761<br>5795 | 29<br>27 | 24<br>27 | 23<br>23 | 22<br>27 | 1<br>1 | 1<br>1 | 1<br>2 | 1,1<br>1,1 |

| Streckart | Längsstreckung | | Breitsreckung | Fixierung |
|---|---|---|---|---|
| | $\lambda_1$ | $\lambda_2$ | $\lambda_q$ | °C |
| A | 1,05 | 3,0 | 3,5 | 200 |
| B | 1,5 | 2,8 | 3,5 | 200 |

GL = Gluconsäureamid des 3-Aminopropyltriethoxysilans
ME = Triethoxysilylpropylmalonsäurediethylester
BA = (Ethoxydimethylsilylpropyl)bernsteinsäureanhydrid
TE = (Methyldiethoxysilyl)-butansäure-(terephthalsäuredimethylester)-amid
I/I = Innenseite/Innenseite
A/A = Außenseite/Außenseite

## Patentansprüche

1. Formkörper enthaltend einen Polyester, der 0,005 bis 20 Gew.-% Oxidpartikel enthält, die einer Oberflächenmodifizierung mit einem Silanisierungsmittel der Formel I unterzogen wurden

$$[R^1R^2R^3]Si\text{-}(CH_2)_l\text{-}X\text{-}R^4 \qquad (I)$$

worin

| | |
|---|---|
| $R^1$ | Cl oder Alkoxy mit 1 bis 6 C-Atomen |
| $R^2$,$R^3$ | Alkyl mit 1 bis 6 C-Atomen oder die Bedeutung von $R^1$ |
| 1 | die Zahlen 1 bis 6 |
| X | eine Einfachbindung, O, NH, CONH, NHCONH |
| $R^4$- | |

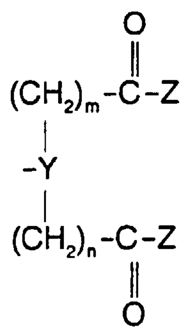

mit Y = CH oder

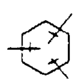 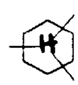 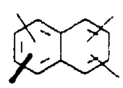

Z = OR oder zwei Reste Z gemeinsam -O-, >NR
und m, n die Zahlen 0 bis 6,
oder

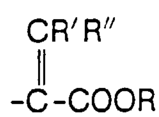

wobei X eine Einfachbindung ist,
mit R, R', R" = H oder Alkyl mit 1 bis 6 C-Atomen,
bedeuten.

2. Formkörper nach Anspruch 1, dadurch gekennzeichnet, daß der Polyester Polyethylenterephthalat, Polybutylenterephthalat, Poly-1,4-cyclohexylen-dimethylenterephthalat, Polyethylen-2,6-naphthalindicarboxylat oder Polyethylen-p-hydroxy-benzoat ist.

3. Formkörper nach Anspruch 1 oder 2, dadurch gekennzeichnet, daß der RSV-Wert des Polyesters im Bereich von 0,40 bis 1,0 dl/g liegt.

4. Formkörper nach einem oder mehreren der Ansprüche 1 bis 3, dadurch gekennzeichnet, daß die Oxidpartikel

solche auf Basis von $SiO_2$, $TiO_2$, $ZrO_2$, $Al_2O_3$, $V_2O_5$, $Nb_2O_5$ sind.

**5.** Formkörper nach einem oder mehreren der Ansprüche 1 bis 4, dadurch gekennzeichnet, daß er eine Folie ist.

**6.** Formkörper nach Anspruch 6, dadurch gekennzeichnet, daß die Folie einoder mehrschichtig ist.

**7.** Formkörper nach Anspruch 5 oder 6, dadurch gekennzeichnet, daß die Folie monoaxial orientiert ist.

**8.** Formkörper nach Anspruch 5 oder 6, dadurch gekennzeichnet, daß die Folie biaxial orientiert ist.

**9.** Formkörper nach einem oder mehreren der Ansprüche 5 bis 8, dadurch gekennzeichnet, daß die Folie thermofixiert ist.

**10.** Formkörper nach einem oder mehreren der Ansprüche 5 bis 9, dadurch gekennzeichnet, daß die Folie zusätzlich anorganische oder organische Inertpartikel enthält.

**11.** Formkörper nach einem oder mehreren der Ansprüche 5 bis 10, dadurch gekennzeichnet, daß die Folie aus mehreren Schichten besteht.

**12.** Formkörper nach Anspruch 11, dadurch gekennzeichnet, daß die Schichten aus verschiedenen Polyestern bestehen.

**13.** Formkörper nach Anspruch 11 oder 12, dadurch gekennzeichnet, daß alle Schichten gleichzeitig extrudiert worden sind.

**14.** Formkörper nach einem oder mehreren der Ansprüche 5 bis 13, dadurch gekennzeichnet, daß die Folie 0,5 bis 500 µm dick ist.

**15.** Formkörper nach einem oder mehreren der Ansprüche 5 bis 13, dadurch gekennzeichnet, daß die Folie ein- oder beidseitig mit einer Lösung oder Dispersion beschichtet ist.

**16.** Verwendung der Formkörper gemäß einem oder mehreren der Ansprüche 5 bis 15 als Trägerfolie für magnetische Aufzeichnungsmedien, als reprographische Folie, als Elektrofolie, als Prägefolie, als Verpackungsfolie oder als Trennnfolie.

**Claims**

**1.** A molding comprising a polyester which contains from 0.005 to 20% by weight of oxide particles which have been subjected to surface modification with a silylating agent of the formula I

$$[R^1R^2R^3]Si\text{-}(CH_2)_l\text{-}X\text{-}R^4 \qquad (I)$$

wherein

| | |
|---|---|
| $R^1$ | is Cl or alkoxy having 1 to 6 carbon atoms, |
| $R^2$ and $R^3$ | are alkyl having 1 to 6 carbon atoms or $R^1$, |
| l | is a number from 1 to 6, |
| X | is a single bond, O, NH, CONH or NHCONH, |
| $R^4$ | is |

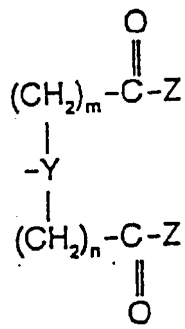

where Y is CH or

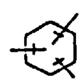 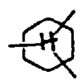 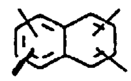

Z is OR or two radicals Z together are -O- or >NR
and m and n are a number from 0 to 6,
or

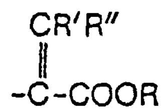

where X is a single bond
and R, R' and R" are H or alkyl having 1 to 6 carbon atoms.

**2.** The molding as claimed in claim 1, wherein the polyester is polyethylene terephthalate, polybutylene terephthalate, poly-1,4-cyclohexylene dimethylene terephthalate, polyethylene 2,6-naphthalenedicarboxylate or polyethylene p-hydroxybenzoate.

**3.** The molding as claimed in claim 1 or 2, wherein the RSV value of the polyester is in the range from 0.40 to 1.0 dl/g.

**4.** The molding as claimed in one or more of claims 1 to 3, wherein the oxide particles are those based on $SiO_2$, $TiO_2$, $ZrO_2$, $Al_2O_3$, $V_2O_5$ or $Nb_2O_5$.

**5.** The molding as claimed in one or more of claims 1 to 4, wherein said molding is a film.

**6.** The molding as claimed in claim 6 , wherein the film has one or more layers.

**7.** The molding as claimed in claim 5 or 6, wherein the film is monoaxially oriented.

**8.** The molding as claimed in claim 5 or 6, wherein the film is biaxially oriented.

**9.** The molding as claimed in one or more of claims 5 to 8, wherein the film is heat-set.

**10.** The molding as claimed in one or more of claims 5 to 9, wherein the film additionally contains inorganic or organic inert particles.

**11.** The molding as claimed in one or more of claims 5 to 10, wherein the film comprises a plurality of layers.

**12.** The molding as claimed in claim 11, wherein the layers comprise different polyesters.

**13.** The molding as claimed in claim 11 or 12, wherein all layers have been simultaneously extruded.

**14.** The molding as claimed in one or more of claims 5 to 13, wherein the film is from 0.5 to 500 µm thick.

**15.** The molding as claimed in one or more of claims 5 to 13, wherein the film is coated on one side or on both sides with a solution or dispersion.

**16.** The use of the moldings as claimed in one or more of claims 5 to 15 as a substrate film for magnetic recording media, as a reprographic film, as a film for electrical applications, as an embossing film, as a packaging film or as a release film.

## Revendications

**1.** Corps moulé contenant un polyester qui contient de 0,005 à 20 % en poids de particules d'oxyde qui ont été soumises à une modification superficielle par un agent de silanation de formule I

$$[R^1R^2R^3]Si\text{-}(CH_2)_l\text{-}X\text{-}R^4 \qquad (I)$$

dans laquelle

| | |
|---|---|
| $R^1$ | représente Cl ou un groupe alcoxy ayant de 1 à 6 atomes de carbone, |
| $R^2$, $R^3$ | représentent un groupe alkyle ayant de 1 à 6 atomes de carbone ou ont la signification de $R^1$, |
| l | est un nombre allant de 1 à 6, |
| X | représente une liaison simple, -O-, -NH-, -CONH-, -NHCONH-, |
| $R^4$ | représente un groupe |

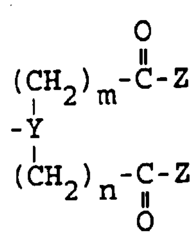

dans lequel
Y = CH ou

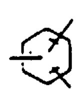 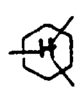 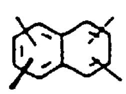

Z = OR, ou deux radicaux Z forment ensemble -O-, >NR et m et n sont les nombres 0 à 6,
ou
un groupe

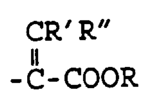

dans lequel X est une liaison simple,

R, R', R" représentant H ou un groupe alkyle ayant de 1 à 6 atomes de carbone.

2. Corps moulé selon la revendication 1, caractérisé en ce que le polyester est le poly(téréphtalate d'éthylène), le poly(téréphtalate de butylène), le poly(téréphtalate de 1,4-cyclohexylène-diméthylène), le poly(2,6-naphtalène-dicarboxylate d'éthylène) ou le poly(p-hydroxybenzoate d'éthylène).

3. Corps moulé selon la revendication 1 ou 2, caractérisé en ce que la viscosité spécifique réduite du polyester se situe dans la plage allant de 0,40 à 1,0 dl/g.

4. Corps moulé selon une ou plusieurs des revendications 1 à 3, caractérisé en ce que les particules d'oxyde sont celles à base de $SiO_2$, $TiO_2$, $ZrO_2$, $Al_2O_3$, $V_2O_5$, $Nb_2O_5$.

5. Corps moulé selon une ou plusieurs des revendications 1 à 4, caractérisé en ce qu'il est une pellicule.

6. Corps moulé selon la revendication 6, caractérisé en ce que la pellicule est monocouche ou multicouche.

7. Corps moulé selon la revendication 5 ou 6, caractérisé en ce que la pellicule est orientée monoaxialement.

8. Corps moulé selon la revendication 5 ou 6, caractérisé en ce que la pellicule est orientée biaxialement.

9. Corps moulé selon une ou plusieurs des revendications 5 à 8, caractérisé en ce que la pellicule est thermo-fixée.

10. Corps moulé selon une ou plusieurs des revendications 5 à 9, caractérisé en ce que la pellicule contient en outre des particules inertes organiques ou minérales.

11. Corps moulé selon une ou plusieurs des revendications 5 à 10, caractérisé en ce que la pellicule est constituée de plusieurs couches.

12. Corps moulé selon la revendication 11, caractérisé en ce que les couches sont constituées de divers polyesters.

13. Corps moulé selon la revendication 11 ou 12, caractérisé en ce que toutes les couches ont été extrudées simultanément.

14. Corps moulé selon une ou plusieurs des revendications 5 à 13, caractérisé en ce que la pellicule a une épaisseur de 0,5 à 500 µm.

15. Corps moulé selon une ou plusieurs des revendications 5 à 13, caractérisé en ce que la pellicule est revêtue d'un côté ou des deux avec une solution ou dispersion.

16. Utilisation des corps moulés selon une ou plusieurs des revendications 5 à 15, en tant que pellicule de support pour des milieux d'enregistrement magnétiques, en tant que pellicule de reprographie, en tant que feuille pour applications électriques, en tant que feuille d'estampage, en tant que pellicule d'emballage ou en tant que pellicule séparatrice.